# EUROPEAN PATENT APPLICATION

(11) **EP 2 141 587 A1**
(43) Date of publication of application: **06.01.2010**
(21) Application number: 08011724.5
(22) Date of filing: 27.06.2008
(51) Int. Cl.: G06F 9/44

(54) **Method and system for generating of a control flow graph for representing a program code**

(71) Applicant: Siemens Aktiengesellschaft, 80333 München (DE)
(72) Inventor: Ndem, Guy Collins, 81739 München (DE)

(57) **Abstract**

The present invention relates to generating of a control flow graph for representing and/or checking a program code, in particular, a program code being implemented by use of object oriented programming, wherein a checking of a system based on or operated by said program code is enabled by the generated control flow graph. The control flow graph is generated by generating of at least one class node in said control flow graph, wherein each class node represents a class defined by the program code; generating of at least one method node in said control flow graph, wherein each method node represents a method defined by a class defined by the program code; and generating of at least one statement node in said control flow graph, wherein each statement node represents a statement of a code of a method defined by the program code.

## Description

The present invention relates to generating of a control flow graph for representing and/or checking a program code, in particular, a program code being implemented by use of object oriented programming, wherein a checking of a system based on or operated by said program code is enabled by the generated control flow graph. In particular, the present invention relates to a method for generating the control flow graph, a corresponding control flow graph generator, a system comprising said control flow graph generator, and/or to use of the generated control flow graph for checking operation of a system and/or a device, wherein the operation of said system and/or device is based on the program code the control flow graph has been generated for.

### BACKGROUND OF THE INVENTION

The most of modern systems, arrangements, or devices are operated by or based on software. When considering the underlying software, in particular, the principles of implementation of the underlying software, object oriented programming has become more and more popular in the last time. Object orientation provides advantages with regard to flexibility and effectiveness when implementing software and with regard to reusability of already implemented software code.

The paradigm of object oriented programming uses "objects" and their interactions to design applications and computer programs. Such "objects" may represent any kind of entities, compounds, or devices, their characteristics, or relationships in a system, arrangement, application, or device. The principles and advantages of object oriented programming are well known. For this reason, they will not be explained in more detail here.
In following, the more general term system will be used, when considering such objects of a system, arrangement, application, or device. In sense of the present invention, a system is a set of interacting or interdependent entities, real or abstract, forming an integrated whole. When implementing a system or an operation of a system by a program code, entities of the corresponding system are represented as objects in object oriented programming. Further, also relationships between the entities and characteristics of entities or their relationships may be represented as objects when using the object oriented programming.

Both, the real and the virtual world (system) may be modelled, implemented, and operated by use of object oriented programming. Thus, real components of a device, for example, and virtual objects of a management tool, for example, can be represented by a program code.

However, also for object oriented software, i.e., program code developed by use of object orientated programming, a save, precise, and error free implementation has to be ensured. Faults in the implemented program code may be cause for erroneous operation of the corresponding system being operated by or based on this erroneous program code. In the worst case, a crash of the corresponding system (arrangement, application, or device) can be caused.

Thus, for example, if an operation of a device is based on software, wherein at least some of entities of the device are represented as objects in the program code, and if program code of a method of an entity of the device comprises faults, erroneous or false operating of the corresponding real entity of the device will be the consequence. In the worst case, a breakdown of the entire device can be caused.

The same is true also for case when a software system is considered. An erroneous implementation of an object in the corresponding program code may be cause for erroneous or false operating of the software system. In the worst case, a breakdown of the whole software system can be caused

To detect errors, origins of wrong performed operations in such software (program code) based or operated systems the underlying software, i.e., program code, is checked by use of appropriate programs (tools, applications, or systems) for software model checking.

For program code checking purposes control flow graphs are used more often. A control flow graph (CFG) is a representation of a program, wherein contiguous regions of the program code without branches, known as basic blocks, are represented as nodes in a graph and edges between nodes indicate the possible flow of the program.

Till now, the most of exiting approaches based on CFGs could not be applied on object oriented programming. Further, these approaches do not provide an abstract representation of CFGs. The CFGs are represented in a textual or image form. A conventional image representation of CFGs does not support a software developer in the desired and necessary way, since navigation through an image provided by a conventional approach is not possible. Further, with increase of size and complexity of a program code, also a textual representation of a CFG provided in conventional way becomes less useful. Thus, conventional representations of CFGs are too unclear when large amounts of program code data have to be represented and/or when program code with complex structure has to be checked.

Beside the conventional approaches based on CFGs also the following two tools or systems are used often when checking software models: Spin model checker (SPIN) and Nasa Java path finder (JPF).

SPIN is a tool for software model checking being written by Gerard J. Holzmann and others and being evolved for more than 15 years. SPIN is an automata-based model checker. Systems to be verified are described in Promela (Process Meta Language), which supports modelling of asynchronous distributed algorithms as non-deterministic automata. Properties to be verified are expressed as Linear Temporal Logic (LTL) formulas, which are negated and then converted into Büchi automata as part of the model-checking algorithm. In addition to model-checking, SPIN can also operate as a simulator, following one possible execution path through the system and presenting the resulting execution trace to the user.

Unlike many other model-checkers, SPIN does not actually perform model-checking itself, but instead generates C sources for a problem-specific model checker. Though this rather antique technique allows saving of memory, improvements of performance, and direct insertion of chunks of C code into the corresponding software model, SPIN is adequate for state machine and cannot easily be applied to object oriented programs. The most of the aspects of object oriented programming can not be represented in Promela and thus in SPIN.

Java path finder (JPF) is a system to verify executable Java bytecode programs. In its basic form, it is a Java Virtual Machine (JVM), which is used as an explicit state software model checker, systematically exploring all potential execution paths of a program to find violations of properties like deadlocks or unhandled exceptions. Unlike traditional debuggers, JPF reports the entire execution path that leads to a defect. JPF is especially well-suited for identifying hard-to-test concurrency defects in multithreaded programs.

While software model checking in theory sounds like a safe and robust verification method, reality shows that it does not scale well. To make it practical, a model checker has to employ flexible heuristics and state abstractions. JPF is unique in terms of its configurability and extensibility, and hence is a good platform to explore new ways to improve scalability.

However, JPF is a pure Java application that can be run either as a standalone command line tool, or embedded into systems like development environments. It was mostly developed - and is still used - at the NASA Ames Research Center. Started in 1999 as a feasibility study for software model checking, JPF has found its way into academia and industry, and has even helped detect defects in real spacecraft.

The down side of this approach is that JPF uses SPIN model checking to transform Java code to Promela and that, thus, the most of java aspects cannot be transformed to Promela. Additionally, the concept of JPF is very difficult to apply since it is attended by an own modified Java Virtual Machine (JVM) and by very difficult configuration issues. Further, JPF does not provide CFGs.

Thus, the known approaches dealing with checking of implemented software are not able to handle large amounts of data and complex systems and are not suited to handle object oriented programs and/or models becoming more popular and important.

### SUMMARY OF THE INVENTION

The object of the present invention is to provide an improved checking of systems, arrangements, applications, and/or devices, operation of which is based on software (i.e., program code).

This object is achieved by a method according to claim 1, a control flow graph (CFG) according to claim 14, a computer program product according to claim 15, and a data carrier according to claim 17, a control flow graph generator according to claim 18, a system according to claim 19, and/or by use of the CFG according to claim 23 and/or claim 24.

Further embodiments of the present invention are presented exemplary by the dependent claims.

In particular, said object is achieved by a method for generating a control flow graph for representing and/or checking a program code, said method comprising:
- generating of a class node in said control flow graph, wherein said class node represents a class defined by said program code;
- generating of a method node in said control flow graph, wherein said method node represents a method defined by said class; and
- generating of a statement node in said control flow graph, wherein said statement node represents a statement of a code of said method.

The program code to be checked represents a program code or (part of) software, based on which operation of a system (arrangement, device, or application) is performed.

By representing objects and interactions required for a software based operation of the system as a control flow graph, provided according to the present invention, an effective, run time and storage space saving way of checking the corresponding software (program code) and, thus, also of the system, operation of which is based on this software (program code). In particular, this checking is performed with regard to identification or detection of possible faults, defects and/or interferences in the program code and, thus, in the corresponding system based on this program code.

Additionally, also monitoring of actually performed operations or operational sequences becomes possible, independently of the amount of data to be analyzed and independently of the complexity of the software (i.e. program code), which is used for operation of the corresponding system.

In a software or program code, classes define the characteristics of a (real or virtual) thing or "object" of the corresponding system, arrangement, application, and/or device. A class is build such, that it comprises characteristics (attributes, fields and/or properties) and behaviours (constructors, destructors, interactions, methods, operations and/or features) of the corresponding thing the class is defined for. In following, such behaviours will be referred to as methods of the corresponding class.

According to the present invention, for each class provided in the program code and to be checked a node - a class node - is generated in the CFG. Further, according to the present invention, for each method of a class a method node is generated in the CFG. Additionally, for each statement of a method a statement node is generated.

According to the present invention, the term statement is used for both for each kind of statements possible in a program code and for each kind of expressions possible in a program code. Thus, the term statement comprises simple statements like assignments, calls, returns, gotos, or assertions, for example, and compound statements like if-statements, switch-statements, while-loops, do-loops or for-loops, for example, both known from principles and semantics of programming languages. Further, according to the present invention, the term statement comprises also expressions.

It has to be mentioned, that the generating of a CFG according to the present invention, is performed by computing and/or data processing units of the computing system. The flexible memory space saving generation of the CFG enables an improved operation of the corresponding computing and/or data processing units of the computing system. Thus, for example, more processes may be operated by these units.

Further, according to an embodiment the present invention, the method comprises:
- generating of a subsequent statement node in said control flow graph, wherein said subsequent statement node represents a statement being a subsequent statement of said statement in said code of said method; and
- generating of a link from said statement node to said subsequent statement node in said control flow graph.

Additionally the method can comprise:
- generating of a preceding statement node in said control flow graph, wherein said preceding statement node represents a statement being a preceding statement of said statement in said code of said method; and
- generating of a link from said preceding statement node to said statement node in said control flow graph.

According to an embodiment of the present invention, the method comprises a generating of a link from said method node to said statement node in said control flow graph, if said statement node represents a first statement of said method.

According to a further embodiment of the present invention, the method comprises:
- generating of a declaration statement node in said control flow graph for a declaration defined in said class; and
- generating of a link from said class node to said declaration statement node.

Here, the declaration can represent also an import declaration in the corresponding class.

According to an embodiment of the present invention, the method comprises a generating of a link from said class node to a further class node in said control flow graph, wherein said further class node represents a further class defined by said program code, if said class uses or imports said further class.

Here, the method can comprise a generating of said further class node in said control flow graph, if said further class node had not yet been generated in said control flow graph.

According to an embodiment of the present invention, the method comprises a generating of a link from said class node to said method node in said control flow graph.

According to a further embodiment of the present invention, the method comprises a generating of a system node in said control flow graph, wherein said system node represents a system defined by said program code.

Here, the method can comprise a generating of a link from said system node to said class node in said control flow graph.

Further, according to an embodiment of the present invention, the method comprises a parsing of said program code.

Here, the parsing can represent a parsing of said program code with regard to classes, methods and statements defined by said program code.

The object provided above is achieved also by a control flow graph for representing and/or checking a program code, said control flow graph being generated by the method for generating the control flow graph as sketched above and explained bellow in more detail.

The object provided above is achieved also by a computer program product comprising a code, said code being configured to implement the method for generating the control flow graph as sketched above and explained bellow in more detail. Here, the computer program product can be comprised in a data carrier.

Further, the object provided above is achieved also by a data carrier comprising the computer program product mentioned above.

Additionally, the object provided above is achieved also by a control flow graph generator for generating a control flow graph for representing and/or checking a program code, wherein said generator comprises at least one generator for:
- generating of a class node in said control flow graph, wherein said class node represents a class defined by said program code;
- generating of a method node in said control flow graph, wherein said method node represents a method defined by said class; and
- generating of a statement node in said control flow graph, wherein said statement node represents a statement of code of said method.

In general, the control flow graph generator is configured to perform the method for generating the control flow graph as sketched above and explained bellow in more detail. Thus, the control flow graph generator comprises corresponding generators and means to generate the corresponding nodes and links of the control flow graph when generating the control flow graph according to the present invention. Additionally, the generator may be configured to perform also corresponding further steps, required for generating the control follow graph according to the present invention.

The object provided above is achieved also by a system comprising a control flow graph generator for generating a control flow graph for representing and/or for checking a program code, wherein said control flow graph generator is the control flow graph generator mentioned above.

According to an embodiment of the present invention, the system comprises a loader, which is configured to upload said program code. Further, said system can comprise also a manager, which is configured to manage said program code in said system.

According to a further embodiment of the present invention, the system comprises a visualising entity, said visualising entity being configured to:
- visualise said control flow graph by use of a graphical representation; and/or
- visualise said control flow graph by use of a textual representation.

Furthermore, the object mentioned above is achieved also by use of a control flow graph for checking operation of a system, wherein:
- said control flow graph represents a program code;
- said control flow graph is generated by the method according to any one of claims 1 - 13; and
- said operation of said system is based on said program code.

Additionally, the object mentioned above is achieved also by use of a control flow graph for checking operation of a device, wherein:
- said control flow graph represents a program code;
- said control flow graph is generated by the method according to any one of claims 1 - 13; and
- said operation of said device is based on said program code.

Thus, the present invention relates in general to generating of a control flow graph for representing and/or checking a program code, in particular, a program code being implemented by use of object oriented programming, wherein a checking of a system based on or operated by said program code is enabled by the generated control flow graph. The control flow graph is generated by generating of at least one class node in said control flow graph, wherein each class node represents a class defined by the program code; generating of at least one method node in said control flow graph, wherein each method node represents a method defined by a class defined by the program code; and generating of at least one statement node in said control flow graph, wherein each statement node represents a statement of a code of a method defined by the program code.

The present invention allows an effective, run time and storage space saving way of checking of program codes. In particular, effective checking of program codes implemented by use of object oriented programming is enabled by the present invention.

Further, also effective and fast checking of systems (arrangements, devices, applications) being operated by or based on a program code is enabled.

Additionally, due to the effective construction of the CFGs, a comfortable and improved way of visualizing operations of a program code, i.e., of a system (arrangement, device, or application) is enabled by the present invention. In particular, visualization of large amounts of data (program code) and/or complex connections between the objects provided by the program code becomes possible by use of the present invention. Further, a fast und effective tracing of operation sequences is enabled by the present invention. Due to the modular structuring (system, classes, methods, statements) of a CFG according to the present invention, fast change and switch from one information level or part of the computer program (and also of the system) to another one becomes possible.

### BRIEF DESCRIPTION OF THE DRAWINGS

The present invention will be more clearly understood from the following description of the preferred embodiments of the invention read in conjunction with the attached drawings, in which:
Fig. 1 shows a scheme of a system according to an embodiment of the present invention, wherein the system comprises a control flow graph generator generating CFGs according to the present invention;
Fig. 2 shows types of nodes comprised in a CFG generated according to an embodiment of the present invention;
Fig. 3a - 3d present examples of definitions of nodes of a CFG provided according to an embodiment of the present invention;
Fig. 4 shows a block diagram providing an overview of steps used for generating a CFG according to an embodiment of the present invention;
Fig. 5 shows a block diagram with steps for generating a CFG according to an embodiment of the present invention;
Fig. 6a - 6f show examples of CFGs generated according to an embodiment of the present invention; and
Fig. 7 presents a CFG generated according to an embodiment of the present invention.

### DESCRIPTION OF THE PREFERRED EMBODIMENTS

In following, the present invention will be described in more detail by use of examples of program code defined in Java. However, the use of Java as programming language, which utilizes concepts of object oriented programming, is just an exemplary use. The implementation of the present invention does not depend on a certain, predefined programming language. According to the present invention, program codes defined by a variety of languages (in particular such allowing implementation of object oriented concepts) can be used to implement the present invention.

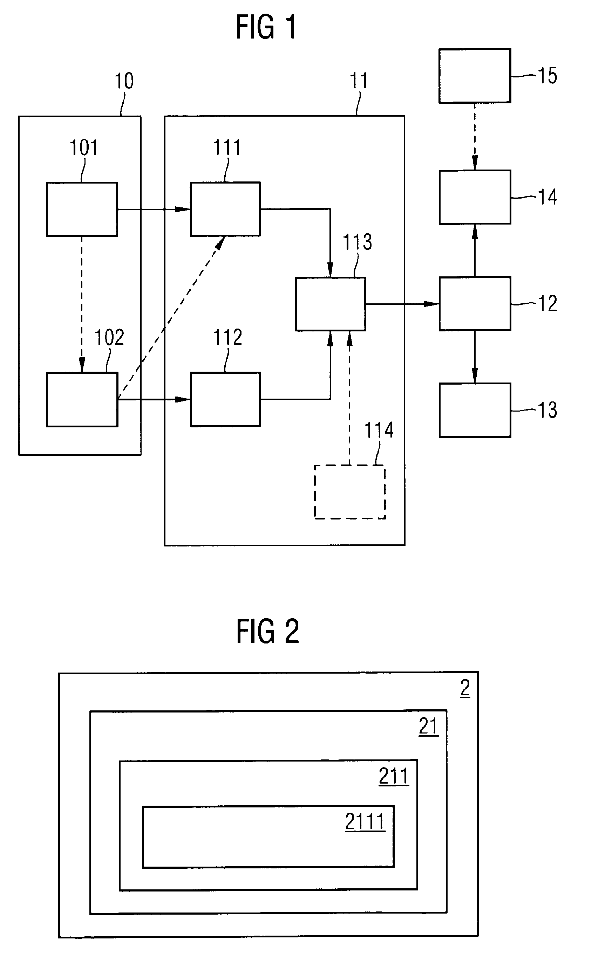

Fig. 1 shows a scheme of a system according to an embodiment of the present invention, wherein the system comprises a control flow graph generator 11 generating CFGs according to the present invention.

First of all, a program code 10 used to operate a system, arrangement, application, or device is provided. The provision of the program code 10 can be performed by a computing and/or data processing entity or device configured for this purpose in the system according to the present embodiment. In case of Java code, a JAR file 101 (or Java ARchive), used for aggregating many Java program files into one to distribute Java classes and associated metadata, and/or Java program files 102 and, if available, an executable program file 102 may be provided for checking purposes.

If a JAR file 101 is provided, it is loaded by a system loader 111. If Java program files 102 and/or an executable program file 102 are provided, they are registered by a system manager 112 and, if required, also loaded by the system loader 111. If in the system area 11 of generating of a CFG an Eclipse JDT (Java Development Tool) API (Application Programming Interface) 114 is available in the system, an abstract syntax tree (AST) representation of the loaded Java program code can be generated by the Eclipse JDT API 114. For this purpose, of course also any other appropriate program for generating a representation of the loaded program code may be used.

Afterwards, according to the present embodiment, the loaded program code with registration information and with an AST representation of the loaded program code, if available, is provided to a CFG parser and generator 113.

In the CFG parser and generator 113, the provided information on the program code is parsed, i.e., analyzed. The parsing of the program code comprises parsing with regard to classes provided and defined in said program code, with regard to methods comprised and defined in said classes and in said program code, and with regard to statements used in the corresponding methods and defined by the program code.

According to the present embodiment, parsing and generation of CFGs is performed by one entity 113. However, a splitting of these steps or processes on more than one entities configured for the corresponding purposes is also possible according to the present invention.

The control flow graph generator 11 is arranged in at least one computing and/or data processing entity of the system enabling generation of CFGs according to the present embodiment. This at least one computing and/or data processing entity or device may correspond to the entity or device configured to provide the program code 10. Here, a variety of arrangements for providing entities arranged appropriately and according to the needs of the user is possible.

According to the present embodiment, the generated CFG 12 representing the program code 10 is provided by an appropriate entity or device 12 configured for this purpose.

The generated CFG 12 may be presented and visualized in both ways by graphical representation 14 and by textual representation 13. According to the present embodiment, two representation entities or devices 14, 13 are provided. However, also one representation entity or device comprising the graphical representation 14 and the textual representation 13 may be used.

The graphical representation 14 can be defined by an appropriate language for graph representation 15 and/or provided by appropriate visualization tool or application 15, both provided by an appropriate entity or device 15. For example, DOT notation for representing the generated CFG and Grappa API for building the visualization can be used for this purpose.

Fig. 2 shows types of nodes, which may be comprised in a CFG generated according to an embodiment of the present invention. After providing the program code 10 and after parsing 113 of the program code 10 a CFG 12 is generated 113. The CFG generated according to the present embodiment comprises four types 2, 21, 211, 2111 of nodes. First of all, a system node 2 can be generated, wherein the system node 2 represents or is a representative of a system defined and/or operated by the program code to be checked. As already mentioned above, with checking of the program code also a checking of the system and/or of operation of the system is performed at the same time according to the present invention.

Further, for each class comprised in and defined by the program code a class node 21 is generated in the CFG. When considering the classes, provided by the program code and specifying the objects (entities, their relations, or characteristics) of the system to be checked, the methods comprised in and defined by the classes are considered in more detail. Thus, for each method provided by a class a method node 211 is generated. The methods, in turn, comprise a variety of statements, defined above. For each statement of a method a corresponding statement node 2111 is generated.

Thus, four levels of detail at once can be provided in an effective, modular, and compact way by generating a CFG according to the present embodiment of the present invention:
a system level (if required) represented by a system node 2, a class level represented by at least one class node 21, a method level represented by at least one method node 211, and
a statement level represented by at least one statement node 2111, wherein also clear relations between these levels are ensured.

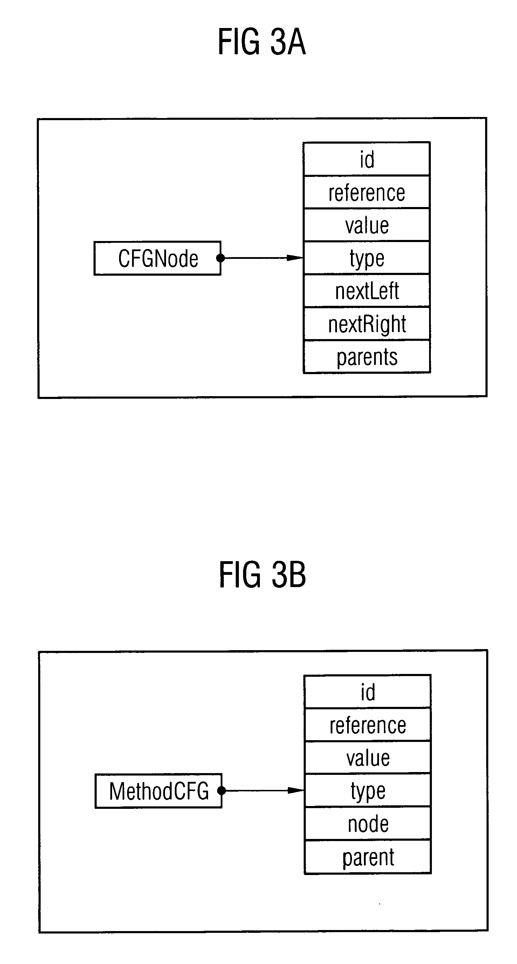

Fig. 3a - 3d present some examples of possible definitions of nodes of a CFG provided according to an embodiment of the present invention.

Fig. 3a shows an exemplary arrangement of a statement node CFGNode, wherein the statement node CFGNode may comprise the following information:
- id: comprising an unique ID of the statement node within a method comprising and defining said statement;
- reference: comprising an unique reference within the system;
- value: comprising a value (AST value) within an abstract syntax tree (AST) generated with regard to the program code to be checked, wherein the AST value identifies or characterizes the statement within the AST;
- type: characterizing the type of the statement node in more detail. Here, a more detailed specification of statements can be provided. Thus, single statements can be specified by a type named, e.g., singleNode; statements representing a block start (e.g., method start, while start, or if start) can be specified by a type named specialNode; statements representing conditions can be specified by a type named, e.g., conditionNode; statements representing a return or break instruction can be specified by a type named, e.g., finalNode. Here, a variety of more detailed specifications of statements can be provided in dependence of requirements of checking and needs of a user;
- nextLeft: comprising an ID of a preceding statement node, i.e., underneath node on the left of the statement node CFGNode;
- nextRight: comprising an ID of a subsequent statement node, i.e., underneath node on the right of the statement node CFGNode, wherein single nodes usually will not have a nextRight node;
- parents: comprising a list nodes that have this statement node CFGNode as nextLeft or nextRight node.

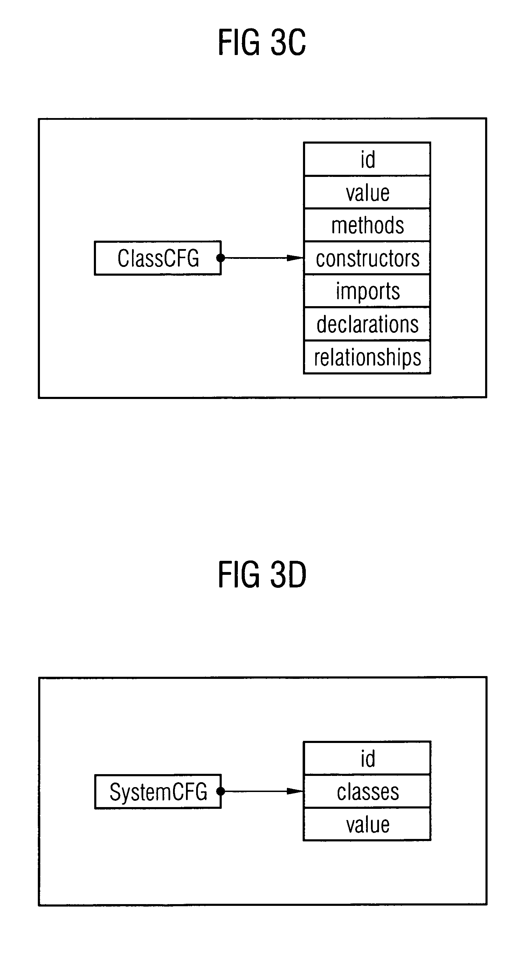

Fig. 3b shows an exemplary arrangement of a method node MethodCFG, wherein the method node MethodCFG may comprise the following information:
- id: comprising an unique ID of the method within a class comprising and defining said method;
- reference: comprising an unique reference within the system;
- value: comprising an AST value, Java reflective value, described above;
- type: characterizing the type of the method node MethodCFG in more detail. Here, a more detailed specification of kinds of methods can be provided. Thus, the types Method or Constructor can be defined, for example;
- node: specifying the first statement of the method, thus, the first statement node CFGNode of this method node MethodCFG, wherein the first statement node may be, for example, of the more special statement type specialNode (for the method start) described above. Starting with this first statement node CFGNode also the rest of statement nodes provided within this method becomes reachable (e.g., by use of information nextRight within the specification of a CFGNode);
- parent: specifying the class node (ClassCFG provided exemplary with Fig. 3c), that contains this method node MethodCFG, e.g., by providing the ID of the corresponding class node.

Fig. 3c shows an exemplary arrangement of a class node ClassCFG, wherein the class node ClassCFG may comprise the following information:
- id comprising an unique ID of the class within the system;
- value: comprising an AST value, described above and being a Java reflective value according to the present embodiment and a file location;
- methods: comprising a list of method nodes MethodCFGs comprised and defined within this class;
- constructors: comprising a list of method nodes (MethodCFGs) which represent constructors within this class;
- imports: comprising a list of import declarations within this class;
- declarations: comprising a list of parameter declarations as CFGNodes within this class;
- relationships: comprising a list of class nodes ClassCFGs which are used or imported by this class.

Fig. 3d shows an exemplary arrangement of a system node SystemCFG, wherein the system node SystemCFG may comprise the following information:
- id: comprising an unique ID of the system;
- classes: comprising a list of classes, i.e., class nodes ClassCFG, defined and comprised within the this system;
- value: defining the location of the system.

It has to be noted, that the node definitions provided above with regard to Figures 3a - 3d are exemplary embodiments of arrangements of the corresponding node classes and that also further appropriate arrangements of the corresponding nodes are possible.

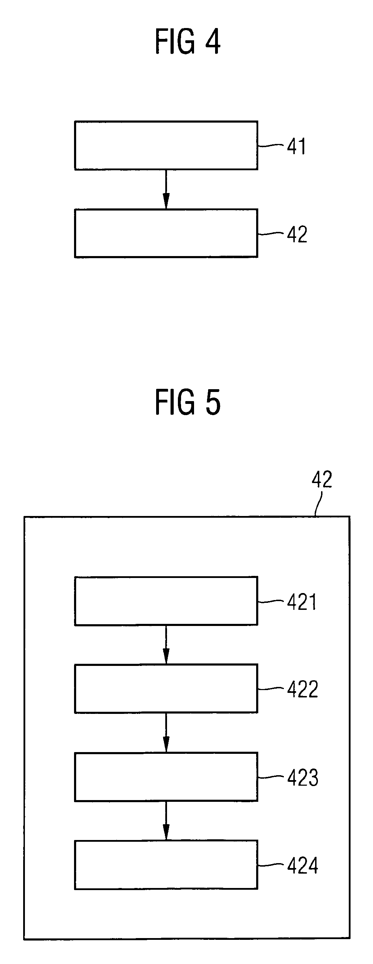

Fig. 4 shows a block diagram providing an overview of steps used for generating a CFG according to an embodiment of the present invention. At first, a program code to be checked is parsed 41, wherein the parsing 41 is performed with regard to classes, methods, and statements provided by the program code. After finishing parsing 41, the classes, methods, and statements extracted, found, or detected in the parsing step 41 are used to generate 42 a CFG for the program code.

Fig. 5 shows a block diagram with steps for generating a CFG according to an embodiment of the present invention. When generating a CFG 42, a system node can be generated 421 to represent the program code serving as basis of operation of a system as a whole. Further, classes comprised in and defined by the program code and detected in the parsing step 41 are analyzed.

For each class a class node is generated 422. Further, a more detailed analysis of the class and, thus, of the class node is performed. If a class comprises or defines declarations, for each declaration a (declaration) statement node is generated. Further, a link from the class node to the generated (declaration) statement node is generated in the CFG. Here, declarations or declaration statements comprise also import declarations or import declaration statements.

Additionally, in the class at least one further class can be used or imported. Usually, these further classes will be also defined by the program code. In such case, to save or keep the relation to these further classes from the (current) class, a link form the class node to a further class node is generated in the CFG. Here, the precondition is of course, that the further class node has to be generated before generating said link between the two classes. Thus, if the further class node had not yet been generated, an appropriate generation or at least instantiation of the further class node will be performed according to the present embodiment.

Further, a link from the system node, if generated, to the class node is generated in the CFG.

When analyzing the class, for each method (comprising also constructors and destructors) of the class a method node is generated 423 in the CFG. Further, a link from the class node to the method node is generated.

When generating the method node 423, the statements comprised in and defined by the corresponding method (and detected in the parsing step 41) are analyzed. For each statement provided by the method a statement node is generated in the CFG 424. If a statement represents a first statement of the method, a link form the method node to the statement node is generated in the CFG.

Further, also the sequence of the statements provided in the method has to be saved in the CFG. Therefore, when generating a (subsequent) statement node representing statement which is a subsequent statement of the currently considered statement, a link from the currently considered statement node to the subsequent statement node is generated in the CFG.

The same is performed also with regard to preceding statements. When generating a (preceding) statement node or if a preceding statement node has been generated, wherein the preceding statement represents a statement which is a preceding statement of the currently considered statement, a link from the currently considered statement node to the preceding statement node is generated in the CFG.

As result of the method for generating a CFG according to the present embodiment, a CFG composed of nodes defined by the four types of nodes (system node, class node, method node, and/or statement node) and of corresponding links between these nodes is provided. The CFG can then be used to check the corresponding program code and, thus, the corresponding system (based on or operated by the corresponding program code) in an effective, comprehensible, and traceable way.

It has to be noted, that a division or structuring of the program code into the required entities of classes, methods, or statements, may be performed and provided by the parser or parsing step mentioned above before generating the corresponding CFG.

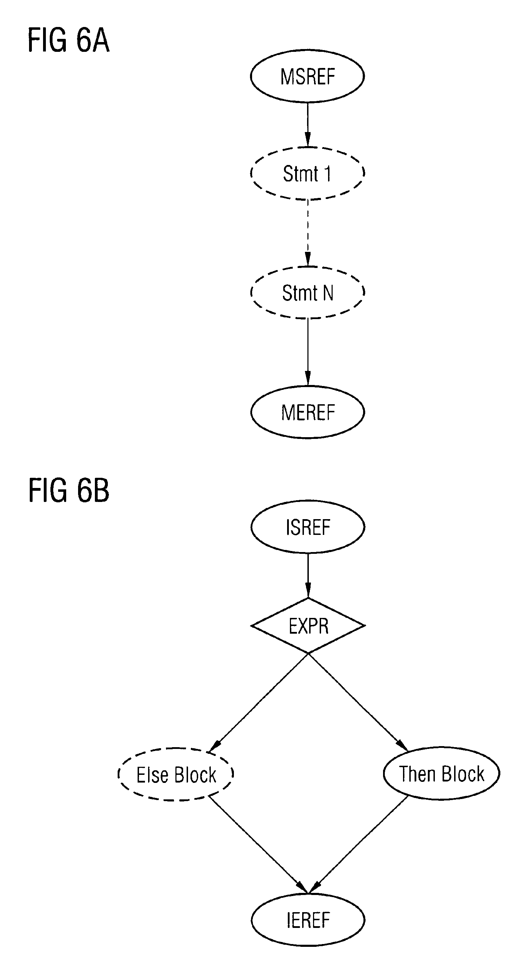

Figures 6a - 6f show examples of CFGs generated according to an embodiment of the present invention, wherein each example shows a small extract of a program code.

In Fig. 6a, the following method declaration is represented as a CFG which is created according to the present invention:

```
 [ Javadoc ] { ExtendedModifier }
      [ < TypeParameter { , TypeParameter } > ]
         ( Type | void ) Identifier (
         [ FormalParameter
                { , FormalParameter } ] ) { [ ] }
         [ throws TypeName { , TypeName } ] ( Block |; )
```

The statement node MSREF represents the start and the statement node MEREF represents the end of the method declaration. The statement nodes Stmtl - StmtN represent statements provided by the method declaration in the given sequential order, wherein the arrows correspond to the links from a preceding statement to a current statement and from a current statement to a subsequent statement.

In Fig. 6b, a CFG representing the following if-statement is visualized:
if ( Expression ) Statement [ else Statement]

Here, the start and the end of the if-statement are represented by the corresponding statement nodes ISREF and IEREF. The expression comprised in the if-condition is represented as statement node EXPR. The subsequent statements comprised in the else block or in the then block of the if-statement of the present embodiment are represented by the corresponding and more generally visualized statement nodes ElseBlock and ThenBlock. Also here, the corresponding links between preceding statements and subsequent statements are visualized by use of arrows.

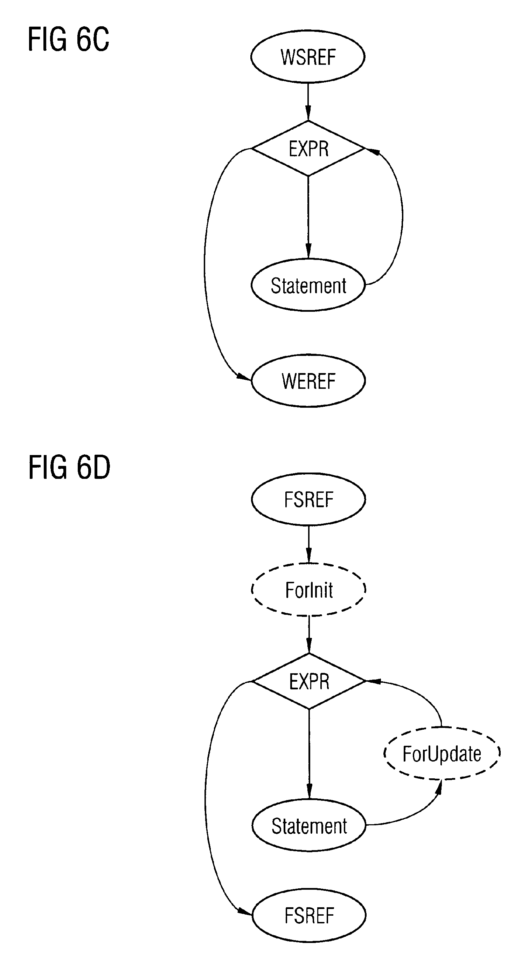

In Fig. 6c, a CFG generated according to the present invention and representing the following While-statement is visualized:
while ( Expression ) Statement

Here, the start and the end of the While-statement are represented by the corresponding statement nodes WSREF and WEREF. The expression comprised in the condition of the While-statement is represented as statement node EXPR. As long as the expression is true the statement represented as statement node "Statement" is performed. This is represented by the corresponding arrows between the corresponding nodes EXPR and Statement. If the expression comprised in the condition of the While-statement is not true, an arrow from the statement node EXPR leads to the end statement node WERF.

In similar way, the following For-statement is represented as CFG in Fig. 6d:

```
 for (
     [ ForInit ];
     [ Expression ] ;
     [ ForUpdate ] )
          Statement
 ForInit:
 Expression { , Expression }
 ForUpdate:
 Expression { , Expression }
 
 [ ForInit ] ;
 while ( Expression )
     { Statement;
         [ ForUpdate ]; }
```

The statement nodes FSREF and FSREF represent the start and the end of the For-statement. The statement node ForInit represents the statements of the for-declaration:

```
[ ForInit ];
[ Expression ]; and
[ ForUpdate ].
```

The statement node EXPR represents the condition or expression provided in the while declaration. The statement node "Statement" represents the statement to be performed in this For-statement, and the statement node ForUpdate represents the (update-) statement to be performed if the statement (represented by node "Statement") to be performed in this For-statement has been finished in a corresponding cycle of the For-statement. The sequence of performance of the given steps or statements is presented also here by the corresponding arrows between the corresponding statement nodes. If the expression comprised in the condition of the While-statement is not true, an arrow from the statement node EXPR leads to the end statement node WERF.

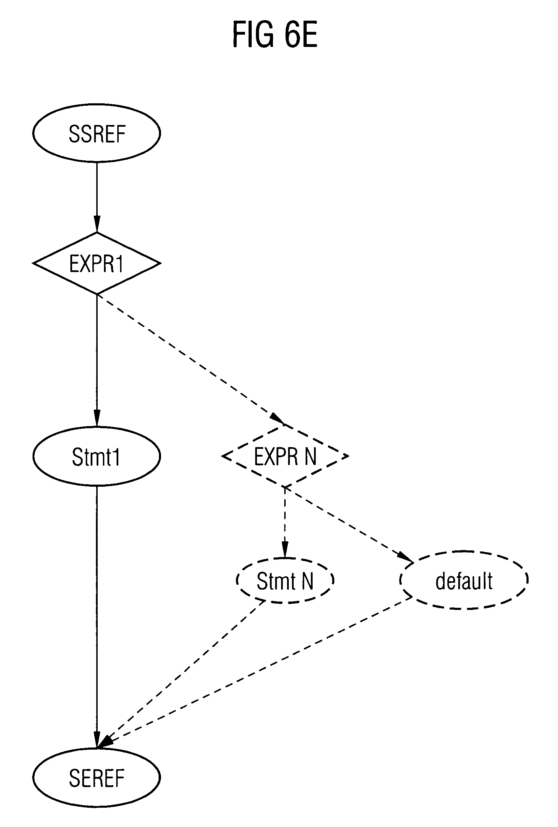

In Fig. 6e, the following Switch-statement is visualized in a similar way as a CFG generated according to the present invention:

```
 SwitchStatement:
          switch ( Expression )
               { { SwitchCase | Statement } } }
 SwitchCase:
          case Expression :
          default :
```

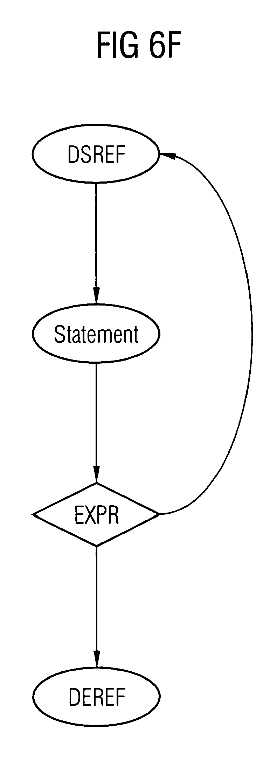

In Fig. 6f, the following Do-statement is visualized in a similar way as a CFG generated according to the present invention:
do Statement while ( Expression );

As already mentioned above, the visualization of CFGs can be provided in a text or graphical form. For the graphical based approach, CFGs can be represented by an appropriate language for representing graphs. In the following, the DOT notation is used. However, the representation of a CFG generated according to the present invention is not limited to use of the DOT language only. Here, several notations or languages for graph representation may be used.

An example of a CFG generated according to the present invention may be presented by the DOT notation as follows:

```
graph -> [strict] (digraph j graph) id 'f' stmt-list 'g'
stmt-list -> [stmt [';'] [stmt-list ] ]
stmt -> attr-stmt j node-stmt j edge-stmt j subgraph j id '='
id
attr-stmt -> (graph j node j edge) attr-list
attr-list ->'[' [a-list ] ']' [attr-list]
a-list -> id '=' id [','] [attr-list]
node-stmt -> node-id [attr-list]
node-id -> id [port]
port -> port-location [port-angle] j port-angle [port-location]
port-location -> ':' id j ':' '(' id ',' id ')'
port-angle -> '@' id
edge-stmt -> (node-id j subgraph) edgeRHS [attr-list]
edgeRHS -> edgeop (node-id j subgraph) [edgeRHS]
subgraph -> [subgraph id] 'f' stmt-list 'g' j subgraph id
```

Beside, during, or alternatively to the generation of the DOT notation, positioning and drawing algorithms can be applied to a CFG generated according to the present invention. Here, the position of each single nodes and the curve of each edge can be inserted in the notation. A visualizer can then receive the DOT representation of CFGs as an input stream and display it to a user.

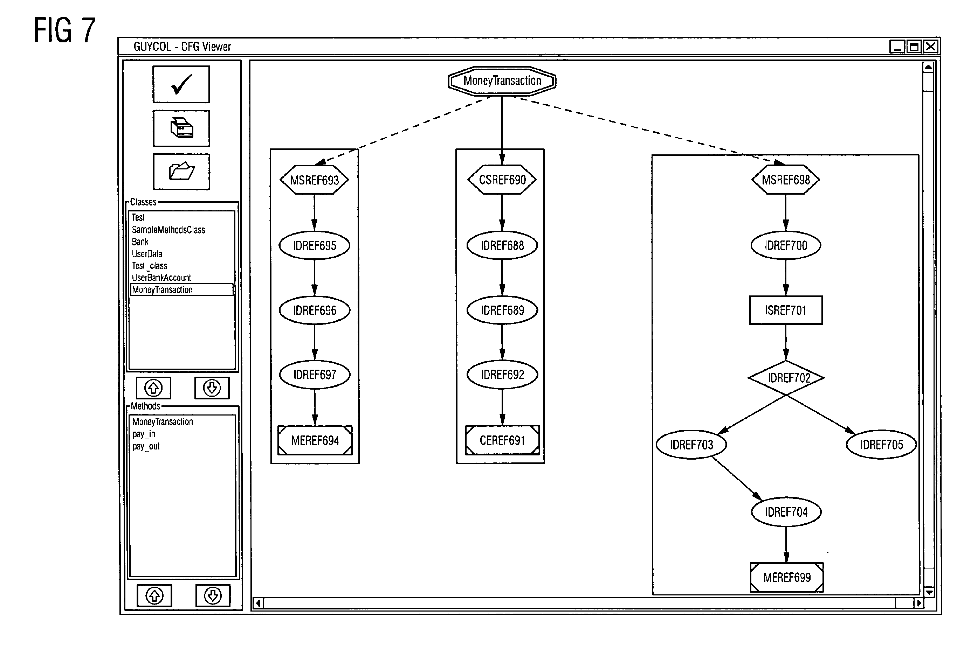

In following, an example of a corresponding DOT notatin comprising the positions of nodes of a CFG generated according to the present invention is provided. Fig. 7 presents, in turn, a graphical representation of this CFG.

```
 subgraph pay_out_int_int {
  style=filled;
  color=thistle2;
  MSREF698 -> IDREF700 [pos="e,990,1071 990,1129"];
  IDREF700 -> ISREF701 [pos="e,990,971 990,1029"];
  ISREF701 -> IDREF702 [pos="e,990,871 990,929"];
  IDREF702 -> IDREF703 [pos="e,860,771 990,829"];
  IDREF703 -> IDREF704 [pos="e,990,671 860,729"];
  IDREF704 -> MEREF699 [pos="e,990,571 990,629"];
  MEREF699
 [shape=Msquare,color=cyan,style=filled,pos="990,550",tip="(Sp
 ecialNode:ME Method End )"];
  IDREF704
 [color=deepskyblue,style=filled,pos="990,650",tip="(return
 diff)"];
  IDREF703
 [color=deepskyblue,style=filled,pos="860,750",tip="(new_acct_
 balance=diff)"];
  IDREF702 -> IDREF705 [pos="e,1120,771 990,829"];
  IDREF705 -> MEREF699 [pos="e,990,571 1120,729"];
  IDREF705
 [color=deepskyblue,style=filled,pos="1120,750",tip="(return
 old_acct_balance)"];
  IDREF702
 [shape=diamond,color=goldl,style=filled,pos="990,850",tip="(d
 iff >= 0)"];
  ISREF701
 [shape=box,color=greenyellow,style=filled,pos="990,950",tip="
 (SpecialNode: If Statement Start if (diff >= 0 ) {...})"];
  IDREF700
 (color=deepskyblue,style=filled,pos="990,1050",tip="(int
 diff=actual_balance - outpayment)"];
  MSREF698
 [shape=hexagon,color=cyan,style=filled,pos="990,1150",tip="(S
 pecialNode: Method Start public int pay_out(int
 actual_balance,int outpayment))"];
 }
```

It is noted that the present invention is not restricted to the above embodiments. In particular, various configurations of entities for generating a control flow graph according to the present invention may be provided. The embodiments presented above may, thus, vary within the scope of the attached claims in dependence of the environment or concrete system the operation of which is to be checked and in dependence of needs of the user working at checking of program codes by use of generating CFGs according to the present invention.

## Claims

1. A method for generating a control flow graph for representing a program code, said method comprising:
- generating of a class node in said control flow graph, wherein said class node represents a class defined by said program code;
- generating of a method node in said control flow graph, wherein said method node represents a method defined by said class; and
- generating of a statement node in said control flow graph, wherein said statement node represents a statement of a code of said method.

2. The method according to claim 1, said method comprising:
- generating of a subsequent statement node in said control flow graph, wherein said subsequent statement node represents a statement being a subsequent statement of said statement in said code of said method; and
- generating of a link from said statement node to said subsequent statement node in said control flow graph.

3. The method according to any one of the preceding claims, said method comprising:
- generating of a preceding statement node in said control flow graph, wherein said preceding statement node represents a statement being a preceding statement of said statement in said code of said method; and
- generating of a link from said preceding statement node to said statement node in said control flow graph.

4. The method according to any one of the preceding claims, said method comprising a generating of a link from said method node to said statement node in said control flow graph, if said statement node represents a first statement of said method.

5. The method according to any one of the preceding claims, said method comprising:
- generating of a declaration statement node in said control flow graph for a declaration defined in said class; and
- generating of a link from said class node to said declaration statement node.

6. The method according to claim 5, wherein said declaration represents an import declaration.

7. The method according to any one of the preceding claims, said method comprising a generating of a link from said class node to an further class node in said control flow graph, wherein said further class node represents a further class defined by said program code, if said class uses or imports said further class.

8. The method according to claim 7, said method comprising a generating of said further class node in said control flow graph, if said further class node had not yet been generated in said control flow graph.

9. The method according to any one of the preceding claims, said method comprising a generating of a link from said class node to said method node in said control flow graph.

10. The method according to any one of the preceding claims, said method comprising a generating of a system node in said control flow graph, wherein said system node represents a system defined by said program code.

11. The method according to claim 10, said method comprising a generating of a link from said system node to said class node in said control flow graph.

12. The method according to any one of the preceding claims, said method comprising a parsing of said program code.

13. The method according to claim 12, wherein said parsing represents a parsing of said program code with regard to classes, methods and statements defined by said program code.

14. A control flow graph for representing a program code, said control flow graph being generated by the method according to any one of claims 1 to 13.

15. A computer program product comprising a code, said code being configured to implement a method according to any one of claims 1 to 13.

16. The computer program product according to claim 15, said computer program product being comprised in a data carrier.

17. A data carrier comprising a computer program product according to claim 15.

18. A control flow graph generator for generating a control flow graph for representing a program code, wherein said generator comprises at least one generator for:
- generating of a class node in said control flow graph, wherein said class node represents a class defined by said program code;
- generating of a method node in said control flow graph, wherein said method node represents a method defined by said class; and
- generating of a statement node in said control flow graph, wherein said statement node represents a statement of code of said method.

19. A system comprising a control flow graph generator for generating a control flow graph for representing a program code, wherein said control flow graph generator is the control flow graph generator according to claim 18.

20. The system according to claim 19, said system comprising a loader, said loader being configured to upload said program code.

21. The system according to claim 19 or 20, said system comprising a manager, said manager being configured to manage said program code in said system.

22. The system according to any one of claims 19 to 21, said system comprising a visualising entity, said visualising entity being configured to:
- visualise said control flow graph by use of a graphical representation; and/or
- visualise said control flow graph by use of a textual representation.

23. Use of a control flow graph for checking operation of a system, wherein:
- said control flow graph represents a program code;
- said control flow graph is generated by the method according to any one of claims 1 - 13; and
- said operation of said system is based on said program code.

24. Use of a control flow graph for checking operation of a device, wherein:
- said control flow graph represents a program code;
- said control flow graph is generated by the method according to any one of claims 1 - 13; and
- said operation of said device is based on said program code.
